# EUROPÄISCHE PATENTSCHRIFT

(11) **EP 3 370 045 B1**
(45) Veröffentlichungstag und Bekanntmachung des Hinweises auf die Patenterteilung: **08.05.2019**
(21) Anmeldenummer: 17158976.5
(22) Anmeldetag: 02.03.2017
(51) Int. Cl.: G01G 23/00, G01G 21/28, A47B 91/02

(54) **WAAGE MIT STELLFUSS**
WEIGHING SCALES WITH ADJUSTABLE FOOT
BALANCE AYANT UN PIED RÉGLABLE

(43) Veröffentlichungstag der Anmeldung: 05.09.2018
(73) Patentinhaber: Bizerba SE & Co. KG, 72336 Balingen (DE)
(72) Erfinder: Dehner, Moritz, 72379 Hechingen (DE)
(74) Vertreter: Manitz Finsterwald Patent- und Rechtsanwaltspartnerschaft mbB

(56) Entgegenhaltungen:
- EP-A1- 1 698 253
- EP-A1- 3 001 159

## Beschreibung

Die vorliegende Erfindung betrifft eine Waage mit einem Gehäuse und einem oder mehreren Stellfüßen, wobei das Gehäuse eine jeweilige Aufnahme aufweist, in die der jeweilige Stellfuß eingesetzt ist, wobei der jeweilige Stellfuß von unten in die jeweilige Aufnahme einführbar ist, wobei der Stellfuß ein drehfest und axialbeweglich in der Aufnahme gelagertes Fußstück und eine axialfest und drehbeweglich mit dem Gehäuse verbundene Stellspindel aufweist, wobei die Stellspindel an ihrem unteren Ende einen Gewindeabschnitt aufweist, mit dem die Stellspindel in ein in dem Fußstück ausgebildetes Gegengewinde eingreift, wobei eine Drehbewegung der Stellspindel eine Längsbewegung des Fußstücks relativ zu der Stellspindel bewirkt.

Eine derartige Waage, bei der die Füße höhenverstellbar sind, um die Waage insbesondere horizontal auszurichten, ist aus dem Dokument EP 3 001 159 A1 bekannt. Dort wird die Stellspindel dadurch axialfest und drehbeweglich mit dem Gehäuse verbunden, dass sie von unten bis zu einem Anschlag in die Aufnahme eingeführt wird, wobei sie in dieser Position mit ihrem oberen Ende durch eine Öffnung in einem horizontalen Gehäuseabschnitt hindurchgreift, und anschließend ein Nivellierungsrad, welches einen größeren Durchmesser als die Öffnung aufweist und mit welchem die Stellspindel betätigt werden kann, fest auf das obere Ende der Stellspindel aufgesetzt wird.

Der Erfindung liegt die Aufgabe zugrunde, den Aufbau und Montage eines Stellfußes einer Waage weiter zu vereinfachen.

Diese Aufgabe wird durch eine Waage mit den Merkmalen des Anspruchs 1 gelöst, und insbesondere dadurch, dass die Stellspindel an ihrem oberen Ende einen Schnappverbindungsabschnitt aufweist, der unter Ausbildung einer, insbesondere lösbaren, Schnappverbindung einen in der jeweiligen Aufnahme ausgebildeten Hinterschnitt eingreift.

Ein Nivellierungsrad zur axialen Halterung des Stellfußes ist daher nicht mehr erforderlich. Dadurch, dass das Nivellierungsrad eingespart werden kann, können auch die Bauhöhe der Waage und die Kosten für den Stellfuß besonders gering gehalten werden.

Die Stellspindel kann mit einem Außengewinde und das Fußstück kann mit einem Innengewinde versehen sein, oder umgekehrt. Um das Fußstück drehfest in der Aufnahme zu halten, ist es bevorzugt, wenn der Außenquerschnitt des Fußstücks und der hiermit zusammenwirkende Innenquerschnitt der Aufnahme jeweils von einer Kreisform abweichen. Insbesondere können die beiden Querschnitte jeweils quadratisch, insbesondere mit verrundeten Kanten, ausgebildet sein.

Nach einer bevorzugten Ausführungsform der Erfindung weist der Schnappverbindungsabschnitt einen oder mehrere, insbesondere zwei einander bezüglich der Längsachse der Stellspindel diametral gegenüberliegende, Biegeschnapphaken auf. Hierdurch kann eine besonders einfache und zugleich zuverlässige Schnappverbindung geschaffen werden. Ferner kann die Schnappverbindung durch Zusammendrücken der Biegeschnapphaken auch einfach wieder gelöst werden.

Grundsätzlich ist es möglich, dass die Aufnahme beispielsweise eine ringförmige Innennut aufweist, um den Hinterschnitt zu bilden. Bevorzugt weist die Aufnahme jedoch eine, insbesondere stufenförmige, Verengung auf, um den Hinterschnitt für den Schnappverbindungsabschnitt zu bilden. Die Verengung kann durch einen radial nach innen vorstehenden, scheibenförmigen Ringflansch gebildet sein. Dieser kann auf einfache Weise dadurch hergestellt werden, dass in einem horizontalen Gehäuseabschnitt eine kreisförmige Öffnung vorgesehen wird.

Vorzugsweise weist die Stellspindel an ihrem oberen Ende zusätzlich einen Betätigungsabschnitt auf, der sich durch die Verengung von unten nach oben hindurcherstreckt, so dass die Stellspindel von oben betätigbar ist.

Nach einer bevorzugten Ausführungsform bildet die Verengung einen Anschlag für den von unten in die jeweilige Aufnahme eingeführten Stellfuß, insbesondere die Stellspindel. Hiermit korrespondierend kann die Stellspindel einen radial nach außen vorstehenden scheibenförmigen Ringflansch aufweisen, der einen Gegenanschlag zu dem durch die Verengung gebildeten Anschlag bildet.

Darüber hinaus kann es vorteilhaft sein, wenn das Fußstück an seiner Unterseite mit einer Aufstellfläche versehen ist, die aus einem anderen Material gefertigt ist als das Fußstück. Beispielsweise kann es sich bei der Aufstellfläche um eine Gummiauflage handeln. Insbesondere kann es vorteilhaft sein, wenn die Aufstellfläche austauschbar und/oder in eine an der Unterseite des Fußstücks ausgebildete Aussparung durch Übermaßpassung aufgenommen ist.

Insbesondere kann ein Satz von verschiedenen Aufstellflächen vorhanden sein, die aus unterschiedlichen Materialien gefertigt sind und mit denen das Fußstück wahlweise versehen sein kann. Hierdurch kann eine Anpassung an verschiedene Oberflächen, insbesondere aus verschiedenen Materialien, auf die die Waage aufgestellt wird, vorgenommen werden.

Die Aufstellfläche aus Gummi kann auch mit dem Fußstück umspritzt werden und ist somit nicht austauschbar.

Darüber hinaus ist es bevorzugt, wenn die Waage eine abnehmbare Lastplatte aufweist, die die jeweilige Aufnahme und den jeweiligen Stellfuß von oben verdeckt, wobei bei abgenommener Lastplatte die jeweilige Aufnahme und/oder der jeweilige Stellfuß von oben zugänglich ist. Eine Demontage weiterer Bauteile der Waage ist bevorzugt nicht erforderlich. Die Stellspindel kann an ihrem oberen Ende zusätzlich einen Betätigungsabschnitt aufweisen, der von oben betätigbar ist und insbesondere einen nach oben gerichteten Steg umfasst.

Ferner kann vorgesehen sein, dass der jeweilige Stellfuß eine Sicherung gegen ein vollständiges Auseinanderschrauben von Fußstück und Stellspindel aufweist, so dass es nicht versehentlich zu einem Verlieren des Fußstücks kommen kann.

Die vorliegende Erfindung betrifft ferner ein Verfahren zum Einsetzen eines Stellfußes in eine Aufnahme eines Gehäuses einer Waage, bei dem ein drehfest und axialbeweglich in der Aufnahme lagerbares Fußstück und eine Stellspindel zu dem Stellfuß zusammengesetzt werden, wobei die Stellspindel an ihrem einen Ende einen Gewindeabschnitt aufweist, mit dem die Stellspindel in ein in dem Fußstück ausgebildetes Gegengewinde eingreift, wobei eine Drehbewegung der Stellspindel eine Längsbewegung des Fußstücks relativ zu der Stellspindel bewirkt, und wobei die Stellspindel an ihrem anderen Ende einen Schnappverbindungsabschnitt aufweist, und der Stellfuß mit dem Schnappverbindungsabschnitt voraus von unten in die Aufnahme des Gehäuses der Waage eingeführt wird, bis der Schnappverbindungsabschnitt unter Ausbildung einer Schnappverbindung einen in der Aufnahme des Gehäuses ausgebildeten Hinterschnitt eingreift, so dass die Stellspindel axialfest und drehbeweglich mit dem Gehäuse verbunden ist.

Bevorzugte Ausführungsformen des erfindungsgemäßen Verfahrens ergeben sich analog zu den bevorzugten Ausführungsformen der erfindungsgemäßen Waage.

Weitere vorteilhafte Ausgestaltungen der Erfindung sind in den Ansprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine Explosionsdarstellung einer erfindungsgemäßen Waage, von der ein Stellfuß und eine in einem Gehäuse ausgebildete Aufnahme für den Stellfuß dargestellt ist,
- Fig. 2: eine Schnittdarstellung der Waage gemäß Fig. 1, und
- Fig. 3: die Schnittdarstellung gemäß Fig. 2, wobei der Stellfuß zusammengesetzt und in die Aufnahme eingesetzt ist.

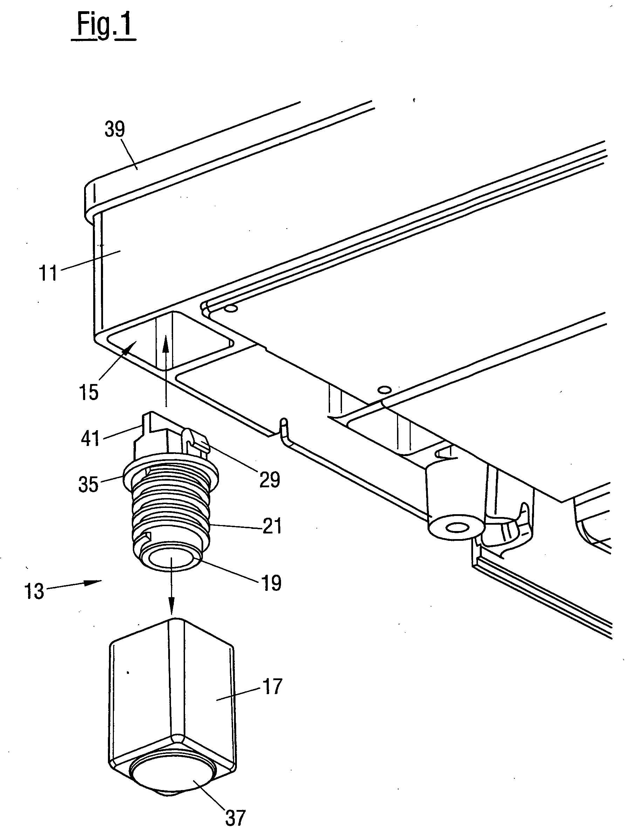

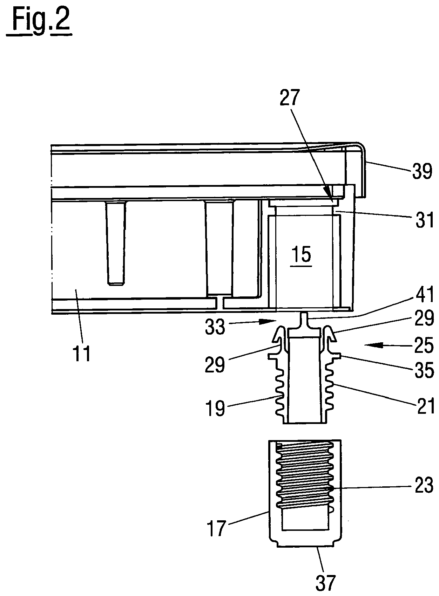

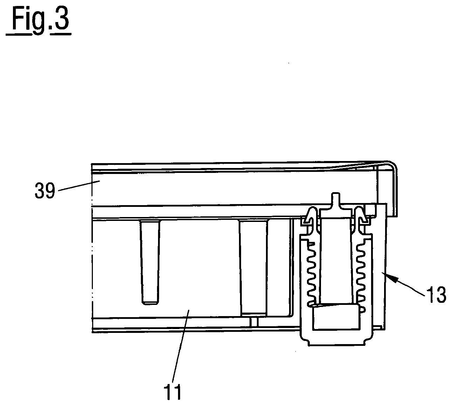

Die in den Fig. 1 bis 3 dargestellte Waage besitzt mehrere, insbesondere vier, Stellfüße 13, von denen lediglich ein Stellfuß 13 gezeigt ist, um die Waage auszurichten. Der jeweilige Stellfuß 13 ist in eine jeweilige, in einem Gehäuse 11 der Waage ausgebildete Aufnahme 15 eingesetzt. Hierzu wird der Stellfuß 13 von unten, d.h. von der Unterseite der Waage her, in die Aufnahme 15 eingeführt.

Der Stellfuß 13 umfasst ein Fußstück 17 und eine Stellspindel 19. Die Stellspindel 19 ist axialfest und drehbeweglich mit dem Gehäuse 11 verbunden, und das Fußstück 17 ist drehfest und axialbeweglich in der Aufnahme 15 gelagert. Die Stellspindel 19 weist an ihrem unteren Ende einen Gewindeabschnitt 21, insbesondere mit einem Außengewinde, auf, der in ein in dem Fußstück 17 ausgebildetes Gegengewinde 23, insbesondere ein Innengewinde, eingreift. Eine Drehbewegung der Stellspindel 19 führt daher zu einer Längsbewegung des Fußstücks 17 relativ zu der Stellspindel 19. Damit wird ermöglicht, das Fußstück 17 innerhalb der Aufnahme 15 zu verschieben, so dass der Stellfuß 13 höhenverstellbar ist.

Die Stellspindel 19 weist an ihrem oberen Ende einen Schnappverbindungsabschnitt 25 in Form von zwei Biegeschnapphaken 29 auf, die sich bezüglich der Längsachse der Stellspindel 19 diametral gegenüberliegen. Mit den Biegeschnapphaken 29 greift die Stellspindel 19 durch einen radial nach innen vorstehenden, scheibenförmigen Ringflansch 31, der innerhalb der Aufnahme 15 ausgebildet ist, hindurch, und hintergreift diesen, so dass eine Schnappverbindung zwischen der Stellspindel 19 und dem Gehäuse 11 ausgebildet ist. Die Oberseite des Ringflansches 31, der eine Verengung der Aufnahme 15 darstellt, bildet damit einen Hinterschnitt 27 für die von unten in die Aufnahme 15 eingeführte Stellspindel 19 bzw. deren Biegeschnapphaken 29.

Der Ringflansch 31 stellt gleichzeitig einen Anschlag für die von unten in die Aufnahme 15 eingeführte Stellspindel 19 dar, die hierfür mit einem Gegenanschlag in Form eines radial nach außen vorstehenden scheibenförmigen Ringflansches 35 versehen ist, der in axialer Richtung der Stellspindel 19 zwischen dem Gewindeabschnitt 21 und den Biegeschnapphaken 29 angeordnet ist.

Die Stellspindel 19 weist an ihrem oberen Ende weiterhin einen Betätigungsabschnitt 33 auf, der sich ebenfalls durch den Ringflansch 31 des Gehäuses 11 nach oben hindurchersteckt und damit von oben betätigbar ist. Der Betätigungsabschnitt 33 weist hierzu einen nach oben gerichteten Steg 41 auf, der mit zwei Fingern einer Hand gefasst und gedreht werden kann. Der Betätigungsabschnitt 33 ist zugänglich, wenn eine Lastplatte 39 der Waage, die das Gehäuse 11 und die Aufnahme 15 samt Stellfuß 13 ansonsten von oben verdeckt, abgenommen wird.

An seiner Unterseite kann das Fußstück 17 mit einer separaten, wechselbaren Aufstellfläche 37 versehen sein, die aus einem anderen Material, beispielsweise aus Gummi, gefertigt sein kann als das Fußstück 17, um einen sicheren Halt auf einer Oberfläche, auf der die Waage aufgestellt ist, zu gewährleisten. Insbesondere können mehrere Aufstellflächen 37 vorgesehen sein, die aus verschiedenen Materialen bestehen, um eine entsprechende Anpassung an das jeweilige Material der Oberfläche vornehmen zu können. Die Aufstellfläche 37 aus Gummi könnte auch mit dem Material des Fußstücks 17 im Kunststoffspritzverfahren umspritzt werden. Die Aufstellfläche 37 und das Fußstück 17 sind dann fest miteinander verbunden und sind als ein Teil auswechselbar.

Der Stellfuß der beschriebenen Waage ist besonders einfach in Aufbau und Montage.

### Bezugszeichenliste

- 11: Gehäuse
- 13: Stellfuß
- 15: Aufnahme
- 17: Fußstück
- 19: Stellspindel
- 21: Gewindeabschnitt
- 23: Gegengewinde
- 25: Schnappverbindungsabschnitt
- 27: Hinterschnitt
- 29: Biegeschnapphaken
- 31: Ringflansch, Anschlag
- 33: Betätigungsabschnitt
- 35: Ringflansch, Gegenanschlag
- 37: Aufstellfläche
- 39: Lastplatte
- 41: Steg

## Patentansprüche

1. Waage mit einem Gehäuse (11) und einem oder mehreren Stellfüßen (13),
wobei das Gehäuse (11) eine jeweilige Aufnahme (15) aufweist, in die der jeweilige Stellfuß (13) eingesetzt ist, wobei der jeweilige Stellfuß (13) von unten in die jeweilige Aufnahme (15) einführbar ist,
wobei der Stellfuß (13) ein drehfest und axialbeweglich in der Aufnahme (15) gelagertes Fußstück (17) und eine axialfest und drehbeweglich mit dem Gehäuse (11) verbundene Stellspindel (19) aufweist,
wobei die Stellspindel (19) an ihrem unteren Ende einen Gewindeabschnitt (21) aufweist, mit dem die Stellspindel (19) in ein in dem Fußstück (17) ausgebildetes Gegengewinde (23) eingreift, wobei eine Drehbewegung der Stellspindel (19) eine Längsbewegung des Fußstücks (17) relativ zu der Stellspindel (19) bewirkt,
**dadurch gekennzeichnet,**
**dass** die Stellspindel (19) an ihrem oberen Ende einen Schnappverbindungsabschnitt (25) aufweist, der unter Ausbildung einer Schnappverbindung einen in der jeweiligen Aufnahme (15) ausgebildeten Hinterschnitt (27) eingreift.

2. Waage nach Anspruch 1,
**dadurch gekennzeichnet,**
**dass** der Schnappverbindungsabschnitt (25) einen oder mehrere, insbesondere zwei einander bezüglich der Längsachse der Stellspindel (19) diametral gegenüberliegende Biegeschnapphaken (29) aufweist.

3. Waage nach Anspruch 1 oder 2,
**dadurch gekennzeichnet,**
**dass** die Aufnahme (15) eine, insbesondere stufenförmige, Verengung (31) aufweist, um den Hinterschnitt (27) für den Schnappverbindungsabschnitt (25) zu bilden.

4. Waage nach Anspruch 3,
**dadurch gekennzeichnet,**
**dass** die Verengung durch einen radial nach innen vorstehenden, scheibenförmigen Ringflansch (31) gebildet ist.

5. Waage nach Anspruch 3 oder 4,
**dadurch gekennzeichnet,**
**dass** die Stellspindel (19) an ihrem oberen Ende zusätzlich einen Betätigungsabschnitt (33) aufweist, der sich durch die Verengung (31) von unten nach oben hindurcherstreckt, so dass die Stellspindel (19) von oben betätigbar ist.

6. Waage nach zumindest einem der Ansprüche 3 bis 5,
**dadurch gekennzeichnet,**
**dass** die Verengung einen Anschlag (31) für den von unten in die jeweilige Aufnahme (15) eingeführten Stellfuß (13), insbesondere die Stellspindel (19), bildet.

7. Waage nach Anspruch 6,
**dadurch gekennzeichnet,**
**dass** die Stellspindel (19) einen radial nach außen vorstehenden scheibenförmigen Ringflansch (35) aufweist, der einen Gegenanschlag zu dem Anschlag (31) bildet.

8. Waage nach zumindest einem der vorstehenden Ansprüche,
**dadurch gekennzeichnet,**
**dass** das Fußstück (17) an seiner Unterseite mit einer Aufstellfläche (37) versehen ist, die aus einem anderen Material gefertigt ist als das Fußstück (17).

9. Waage nach Anspruch 8,
**dadurch gekennzeichnet,**
**dass** ein Satz von verschiedenen Aufstellflächen (37) vorhanden ist, die aus unterschiedlichen Materialien gefertigt sind und mit denen das Fußstück (17) wahlweise versehen sein kann.

10. Waage nach zumindest einem der vorstehenden Ansprüche,
**dadurch gekennzeichnet,**
**dass** die Waage eine abnehmbare Lastplatte (39) aufweist, die die jeweilige Aufnahme (15) und den jeweiligen Stellfuß (13) von oben verdeckt, wobei bei abgenommener Lastplatte (39) die jeweilige Aufnahme (15) und/oder der jeweilige Stellfuß (13) von oben zugänglich ist.

11. Waage nach zumindest einem der vorstehenden Ansprüche,
**dadurch gekennzeichnet,**
**dass** die Stellspindel (19) an ihrem oberen Ende zusätzlich einen Betätigungsabschnitt (33) aufweist, der von oben betätigbar ist und insbesondere einen nach oben gerichteten Steg (41) umfasst.

12. Waage nach zumindest einem der vorstehenden Ansprüche,
**dadurch gekennzeichnet,**
**dass** der jeweilige Stellfuß (13) eine Sicherung gegen ein vollständiges Auseinanderschrauben von Fußstück (17) und Stellspindel (19) aufweist.

13. Verfahren zum Einsetzen eines Stellfußes (13) in eine Aufnahme (15) eines Gehäuses (11) einer Waage, bei dem
ein drehfest und axialbeweglich in der Aufnahme (15) lagerbares Fußstück (17) und eine Stellspindel (19) zu dem Stellfuß (13) zusammengesetzt werden, wobei die Stellspindel (19) an ihrem einen Ende einen Gewindeabschnitt (21) aufweist, mit dem die Stellspindel (19) in ein in dem Fußstück (17) ausgebildetes Gegengewinde (23) eingreift, wobei eine Drehbewegung der Stellspindel (19) eine Längsbewegung des Fußstücks (17) relativ zu der Stellspindel (19) bewirkt, und wobei die Stellspindel (19) an ihrem anderen Ende einen Schnappverbindungsabschnitt (25) aufweist, und
der Stellfuß (13) mit dem Schnappverbindungsabschnitt (25) voraus von unten in die Aufnahme (15) des Gehäuses (11) der Waage eingeführt wird, bis der Schnappverbindungsabschnitt (25) unter Ausbildung einer Schnappverbindung einen in der Aufnahme (15) des Gehäuses (11) ausgebildeten Hinterschnitt (27) eingreift, so dass die Stellspindel (19) axialfest und drehbeweglich mit dem Gehäuse (11) verbunden ist.

## Claims

1. A scale having a housing (11) and one or more adjustable feet (13),
wherein the housing (11) has a respective mount (15) into which the respective adjustable foot (13) is inserted, wherein the respective adjustable foot (13) can be introduced into the respective mount (15) from below;
wherein the adjustable foot (13) has a foot piece (17) which is supported in the mount (15) in a rotationally fixed and axially movable manner and has an adjustable spindle (19) which is connected to the housing (11) in an axially fixed and rotationally movable manner; and
wherein the adjustable spindle (19) has a threaded section (21) at its lower end with which the adjustable spindle (19) engages into a counter-thread (23) formed in the foot piece (17), wherein a rotational movement of the adjustable spindle (19) effects a longitudinal movement of the foot piece (17) relative to the adjustable spindle (19),
**characterized in that**
the adjustable spindle (19) has a snap-in connection section (25) at its upper end which engages an undercut (27) formed in the respective mount (15) while forming a snap-in connection.

2. A scale in accordance with claim 1,
**characterized in that**
the snap-in connection section (25) has one or more bending snap-in hooks, in particular two bending snap-in hooks (29) disposed diametrically opposite one another with respect to the longitudinal axis of the adjustable spindle (19).

3. A scale in accordance with claim 1 or claim 2,
**characterized in that**
the mount (15) has a constriction, in particular a step-shaped constriction (31), to form the undercut (27) for the snap-in connection section (25).

4. A scale in accordance with claim 3,
**characterized in that**
the constriction is formed by a radially inwardly projecting disk-shaped ring flange (31).

5. A scale in accordance with claim 3 or claim 4,
**characterized in that**
the adjustable spindle (19) additionally has an actuation section (33) at its upper end which extends from the bottom to the top through the constriction (31) so that the adjustable spindle (19) can be actuated from above.

6. A scale in accordance with at least one of the claims 3 to 5,
**characterized in that**
the constriction forms an abutment (31) for the adjustable foot (13), in particular the adjustable spindle (19), introduced into the respective mount (15) from below.

7. A scale in accordance with claim 6,
**characterized in that**
the adjustable spindle (19) has a radially outwardly projecting disk-shaped ring flange (35) which forms a counter-abutment to the abutment (31).

8. A scale in accordance with at least one of the preceding claims,
**characterized in that**
the foot piece (17) is provided with an installation surface (37) at its lower side which is produced from a different material than the foot piece (17).

9. A scale in accordance with claim 8,
**characterized in that**
a set of different installation surfaces (37) are present which are produced from different materials and with which the foot piece (17) can selectively be provided.

10. A scale in accordance with at least one of the preceding claims,
**characterized in that**
the scale has a removable load plate (39) which covers the respective mount (15) and the respective adjustable foot (13) from above, with the respective mount (15) and/or the respective adjustable foot (13) being accessible from above with a removed load plate (39).

11. A scale in accordance with at least one of the preceding claims,
**characterized in that**
the adjustable spindle (19) additionally has an actuation section (33) at its upper end which is actuable from above and which in particular comprises an upwardly directed web (41).

12. A scale in accordance with at least one of the preceding claims,
**characterized in that**
the respective adjustable foot (13) has a security against a complete unscrewing of the foot piece (17) and the adjustable spindle (19).

13. A method of inserting an adjustable foot (13) into a mount (15) of a housing (11) of a scale, in which
a foot piece (17) supportable in the mount (15) in a rotationally fixed and axially movable manner and an adjustable spindle (19) are assembled to form the adjustable foot (13), wherein the adjustable spindle (19) has a threaded section (21) at its one end with which the adjustable spindle (19) engages into a counter-thread (23) formed in the foot piece (17), wherein a rotational movement of the adjustable spindle (19) effects a longitudinal movement of the foot piece (17) relative to the adjustable spindle (19), and wherein the adjustable spindle (19) has a snap-in connection section (25) at its other end; and
the adjustable foot (13) is introduced into the mount (15) of the housing (11) of the scale from below with the snap-in connection section (25) at the front until the snap-in connection section (25) engages an undercut (27) formed in the mount (15) of the housing (11) while forming a snap-in connection so that the adjustable spindle (19) is connected to the housing (11) in an axially fixed and rotationally movable manner.

## Revendications

1. Balance comportant un boîtier (11) et un ou plusieurs pieds de réglage (13), dans laquelle
le boîtier (11) présente un logement respectif (15) dans lequel est inséré le pied de réglage respectif (13),
le pied de réglage respectif (13) peut être inséré depuis le bas dans le logement respectif (15),
le pied de réglage (13) comprend une partie de pied (17) montée solidairement en rotation et de façon axialement mobile dans le logement (15), et une broche de réglage (19) reliée de façon axialement fixe et mobile en rotation au boîtier (11),
la broche de réglage (19) présente à son extrémité inférieure une partie filetée (21) par laquelle la broche de réglage (19) vient s'engager dans un taraudage complémentaire (23) réalisé dans la partie de pied (17),
un mouvement de rotation de la broche de réglage (19) provoque un mouvement longitudinal de la partie de pied (17) par rapport à la broche de réglage (19),
**caractérisée en ce que**
la broche de réglage (19) présente à son extrémité supérieure une portion de liaison par encliquetage (25) qui vient s'engager dans une contre-dépouille (27) réalisée dans le logement respectif (15) en établissant une liaison par encliquetage.

2. Balance selon la revendication 1,
**caractérisée en ce que**
la portion de liaison par encliquetage (25) comprend un ou plusieurs, en particulier deux crochets d'encliquetage en flexion (29) diamétralement opposés l'un à l'autre par rapport à l'axe longitudinal de la broche de réglage (19).

3. Balance selon la revendication 1 ou 2,
**caractérisée en ce que**
le logement (15) présente un étranglement (31) en particulier en gradins pour former la contre-dépouille (27) pour la portion de liaison par encliquetage (25).

4. Balance selon la revendication 3,
**caractérisée en ce que**
l'étranglement est formé par une bride annulaire (31) en forme de disque qui fait saillie radialement vers l'intérieur.

5. Balance selon la revendication 3 ou 4,
**caractérisée en ce que**
la broche de réglage (19) présente à son extrémité supérieure en supplément une portion d'actionnement (33) qui s'étend à travers l'étranglement (31) depuis le bas vers le haut, de sorte que la broche de réglage (19) est actionnable depuis le haut.

6. Balance selon l'une au moins des revendications 3 à 5,
**caractérisée en ce que**
l'étranglement forme une butée (31) pour le pied de réglage (13) inséré depuis le bas dans le logement respectif (15), en particulier pour la broche de réglage (19).

7. Balance selon la revendication 6,
**caractérisée en ce que**
la broche de réglage (19) comprend une bride annulaire (35) en forme de disque qui fait saillie radialement vers l'extérieur et qui constitue une butée complémentaire à la butée (31).

8. Balance selon l'une au moins des revendications précédentes,
**caractérisée en ce que**
sur sa face inférieure, la partie de pied (17) est pourvue d'une surface de pose (37) qui est fabriquée à partir d'un autre matériau que la partie de pied (17).

9. Balance selon la revendication 8,
**caractérisée en ce que**
il existe un lot de différentes surfaces de pose (37) qui sont fabriquées de différents matériaux et avec lesquelles la partie de pied (17) peut être pourvue au choix.

10. Balance selon l'une au moins des revendications précédentes,
**caractérisée en ce que**
la balance comprend une plaque de charge (39) amovible qui recouvre depuis le haut le logement respectif (15) et le pied de réglage respectif (13), et lorsque la plaque de charge (39) est enlevée, le logement respectif (15) et/ou le pied de réglage respectif (13) est accessible depuis le haut.

11. Balance selon l'une au moins des revendications précédentes,
**caractérisée en ce que**
à son extrémité supérieure, la broche de réglage (19) présente en supplément une portion d'actionnement (33) qui est actionnable depuis le haut et qui comprend en particulier une barrette (41) dirigée vers le haut.

12. Balance selon l'une au moins des revendications précédentes,
**caractérisée en ce que**
le pied de réglage respectif (13) présente un moyen de blocage à l'encontre d'un dévissage complet de la partie de pied (17) et de la broche de réglage (19).

13. Procédé d'insertion d'un pied de réglage (13) dans un logement (15) d'un boîtier (11) d'une balance,
dans lequel
une partie de pied (17) susceptible d'être monté solidairement en rotation et de façon axialement mobile dans le logement (15) et une broche de réglage (19) sont assemblés pour donner le pied de réglage (13),
la broche de réglage (19) présente à l'une de ses extrémités une portion filetée par laquelle la broche de réglage (19) vient s'engager dans un taraudage complémentaire (23) réalisé dans la partie de pied (17),
un mouvement de rotation de la broche de réglage (19) provoque un mouvement longitudinal de la partie de pied (17) par rapport à la broche de réglage (19), et
la broche de réglage (19) présente à son autre extrémité une portion de liaison par encliquetage (25), et
le pied de réglage (13) est inséré depuis le bas dans le logement (15) du boîtier (11) de la balance en ayant sa portion de liaison par encliquetage (25) en avant, jusqu'à ce que la portion de liaison par encliquetage (25) vienne s'engager dans une contre-dépouille (27), réalisée dans le logement (15) du boîtier (11), en établissant une liaison par encliquetage, de sorte que la broche de réglage (19) est reliée au boitier (11) de façon axialement fixe et mobile en rotation.
